**Europäisches Patentamt**

**European Patent Office**

**Office européen des brevets**

(11) Numéro de publication: **0 116 480 B1**

(19)

(12) # FASCICULE DE BREVET EUROPÉEN

(45) Date de publication du fascicule du brevet:
20.05.87

(51) Int. Cl.⁴: **G 02 B 6/38,** G 02 B 6/44

(21) Numéro de dépôt: **84400006.7**

(22) Date de dépôt: **04.01.84**

(54) **Boîte de raccordement et de brassage pour fibres optiques.**

(30) Priorité: **05.01.83 FR 8300075**

(43) Date de publication de la demande:
**22.08.84 Bulletin 84/34**

(45) Mention de la délivrance du brevet:
**20.05.87 Bulletin 87/21**

(84) Etats contractants désignés:
**BE CH DE GB IT LI NL SE**

(56) Documents cité:
**EP-A-0 055 231**
**DE-A-2 621 823**
**FR-A-2 498 766**
**US-A-3 147 337**

**IEEE TRANSACTIONS ON COMMUNICATIONS,
vol. COM-26, no. 7, juillet 1978, pages 1028-1035,
New York. US. G. COCITO et al.: "COS 2
experiment in Turin: field test on an optical cable in
ducts"**

(73) Titulaire: **SOCIETE ANONYME DE
TELECOMMUNICATIONS, 41, rue Cantagrel,
F-75624 Paris Cedex 13 (FR)**
Titulaire: **SOCIETE INDUSTRIELLE DE LIAISONS
ELECTRIQUES - SILEC, 64bis, rue de Monceau,
F-75008 Paris (FR)**

(72) Inventeur: **Dewez, Vincent, 150, rue Saint Maur,
F-75011 Paris (FR)**
Inventeur: **Michaux, Jean- Pierre, 75, rue des
Pyrénées, F-75020 Paris (FR)**
Inventeur: **Mouliac, Daniel, 12, rue Yves Farges,
F-94500 Champigny (FR)**

(74) Mandataire: **Martinet & Lapoux, 62, rue des
Mathurins, F-75008 Paris (FR)**

## Description

La présente invention concerne d'une manière générale le raccordement deux à deux des fibres optiques d'au moins deux ensembles dans lesquels les fibres optiques peuvent être réparties circulairement ou coplanairement. Plus particulièrement, elle a trait à une boîte de raccordement de fibres optiques qui offre la possibilité d'effectuer des brassages des fibres, c'est à dire des modifications de connexion entre fibres des deux ensembles.

Des boîtes de raccordement et de brassage sont déjà divulguées par exemple dans les demandes de brevet GB-A-2.040.494, DE-A-3.006.131 et EP-A-0.024.235. Toutes ces boîtes ont une structure cylindrique et sont propres à raccorder les extrémités des fibres optiques d'un premier câble aux extrémités des fibres optiques d'un second câble. Les câbles pénètrent dans la boîte colinéairement à son axe longitudinal par ses bases. Les dispositifs de raccordement élémentaires sont contenus dans la boîte au niveau de son plan médian transversal et raccordent chacun l'extrémité d'une fibre optique du premier câble à l'extrémité d'une fibre optique du second câble. Les dispositifs de raccordement jouant le rôle d'épissures sont généralement cylindriques, nécessitent généralement plusieurs pièces-supports exigeant beaucoup de place et doivent être complètement démontés ou remplicés si on désire modifier les raccordement entre fibres.

En outre, certaines boîtes (GB-A-2.040.494 et DE-A-3.006.131) contiennent des boucles de réserves des fibres optiques en vue de disposer d'une longueur suffisante pour accéder aux différents dispositifs de raccordement. Ces boucles de réserves sont logées dans les deux espaces entre les extrémités de la boîte et le support central des dispositifs de raccordement.

Il résulte des dispositions de fibres optiques dans les boîtes de raccordement précitées que les opérations de raccordement et de brassage sont longues et délicates et font appel à un outillage complexe et spécial et que les dimensions de la boîte sont très grandes.

Une autre boîte de raccordement de câbles à fibres optiques décrite dans la demande de brevet FR-A-2 498 766 offre l'avantage que les boucles de réserve de fibre ne sont pas juxtaposées aux dispositifs de raccordement, mais sont superposées à ceux-ci. La boîte est composée d'un premier réceptacle destiné à contenir des boucles de réserve de deux câbles à raccorder, d'un second réceptacle destiné à contenir des dispositifs de raccordement de fibres, et d'un panneau amovible qui forme une plaque-support des dispositifs de raccordement et le fond du second réceptacle et qui est monté à pivotement par charnière sur le premier réceptacle pour fermer ce dernier.

Dans la boîte selon la FR-A-2 498 766, les deux câbles sont lovés en des boucles de réserve respectivement concentriques dans le premier réceptacle, puis après lovage, pénètrent tels quels directement dans le panneau formant le fond du second réceptacle, sans aucuns épanouissement et séparation des fibres de chaque câble. Les boucles de réserve des câbles servent à offrir une longueur disponible suffisante de câble pour éloigner le second réceptacle du premier réceptacle afin de permettre des opérations d'entretien, d'inspection et de raccordement des connexions des fibres à l'extérieur du "trou d'homme" ou pot souterrain où est logé la boîte. Cependant, le second réceptacle ne contient pas de véritables boucles de réserve des fibres individuelles de l'un des câbles au moins, si bien que lors d'un nouvel raccordement de deux fibres nécessitant une "reprise d'une fibre", c'est-à-dire une coupe de l'extrémité d'une fibre, il est nécessaire de dégainer le câble sur une longueur suffisante et donc d'épanouir à nouveau toutes les fibres du câble avec risque de fissure ou cassure et d'emmêlement de celles-ci. En outre, le boîtier selon la FR-A-2 498 766 nécessite un assemblage de nombreuses pièces ce qui lui confère un coût de fabrication élevé.

La présente invention à pour but d'obvier aux inconvénients précédents et en particulier de fournir une boîte de raccordement et de brassage dans laquelle des bouclès de réserve de fibres individuelles de l'un des deux ensembles, tels que câbles, à raccorder sont accessibles aisément avec les dispositifs de raccordement, tout en permettant, lors des opérations de raccordement, une protection des boucles de réserve des fibres de l'autre ensemble dont les fibres sont généralement précâblées, et en offrant des dimensions relativement réduites. L'invention vise également à réaliser des raccordements de faible coût en faisant appel à un nombre réduit de pièces et à un nombre très faible de pièces à démonter.

En outre, dans les solutions proposées par l'invention est également considérée la durée de vie des fibres optiques qui dépend principalement, lors des raccordements, du rayon de courbure minimale que peut subir une fibre optique sans influencer ses caractéristiques physiques. L'expérience a montré que la durée de vie des fibres n'était pas pénalisée lorsque le rayon des courbures imposées aux fibres était au moims égal à r = 50 mm.

L'invention propose essentiellement deux modes de réalisation de boîte, l'un ayant trait à un brassage direct entre deux ensembles à fibres optiques et l'autre ayant trait à un brassage par jarretières entre les ensembles à fibres optiques.

Selon le premier mode de réalisation, une boîte de raccordement et de brassage de premier et second ensembles de fibres optiques est telle que définie dans la revendication 1.

Le premier mode de réalisation présente les avantaages suivants:
- la boîte n'est constituée que de trois pièces, à savoir les deux réceptacles et le panneau;
- les boucles d'aisance des fibres sont lovées à plat et sont superposables dans les compartiments, ce qui réduit l'encombrement de la boîte qui n'est pratiquement limité que par le rayon r des boucles;

- l'accessibilité des fibres est aisée, le panneau pouvant être monté à pivotement sur le premier réceptacle afin de donner accès au premier compartiment qui contient les boucles des fibres du premier ensemble et qui est complètement fermé lors du lovage des fibres du second ensemble; ceci empêche un emmêlement des fibres des ensembles et permet de précâbler les fibres du premier ensemble;

- le brassage des fibres du second ensemble est effectué après que les fibres du premier ensemble soit protégées par le panneau rabattu sur le premier réceptacle;

- les dispositifs de raccordement des fibres sont accessibles simplement en retirant le second réceptacle jouant le rôle de couvercle de la boîte.

Selon le second mode de réalisation, une boîte de raccordement et de brassage de deux ensembles de fibres optiques est telle que définie dans la revendication 14 en combinaison avec la revendication 1.

Outre des avantages similaires à ceux de premier mode de réalisation, les extrémités des fibres optiques de tous les ensembles dans la boîte selon le second mode de réalisation peuvent être précâblées, et seuls les changements des connexions des jarretières permettront le brassage des connexions entre fibres, ce qui augmente la fiabilité des fibres optiques des ensembles qui ne sont manipulées qu'une seule fois.

La boîte peut comporter plusiéurs panneaux pivotant autour d'un même axe, ce qui augmente la capacité de raccordement eu égard au volume relativement réduit de la boîte. La séparation entre les compartiments délimités par les panneaux limite les risques de raccordement indésirables.

D'autres avantages et caractéristiques de la présente invention apparaîtront plus clairement à la lecture de la description suivante de plusieurs modes de réalisation en référence aux dessins annexés correspondants, dans lesquels:

- la Fig. 1 montre schématiquement une boîte de raccordement de deux câbles à fibres optiques sans jarretières selon la technique antérieure;

- la Fig. 2 est une vue en perspective arrière d'une boîte de raccordement et de brassage "direct" selon le premier mode de réalisation;

- la Fig. 3 est une vue en perspective de la face avant du panneau de la boîte de la Fig. 2;

- les Figs. 4, 5 et 6 montrent différents modes de repérage des fibres optiques;

- la Fig. 7 montre schématiquement le raccordement par jarretières de deux ensembles de câbles de fibres optiques;

- les Figs. 8A et 8B sont une vue de face du fond d'une boîte de raccordement et de brassage par jarretières selon le second mode de réalisation dont un panneau est rabattu sur le fond et un autre panneau est sorti par pivotement d'un angle de 180° environ;

- la Fig. 9 est une vue de dessus partiellement en coupe de la boîte des Figs. 8A et 8B; et

- la Fig. 10 est une vue en coupe le long de la ligne X-X de la Fig. 9 montrant la face interne du fond de la boîte.

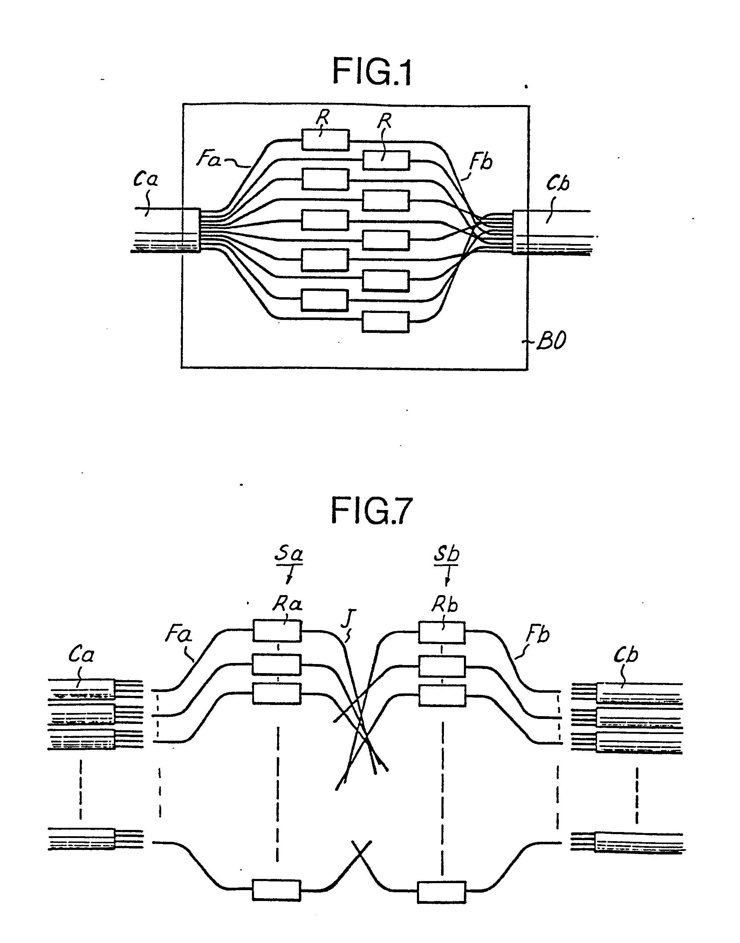

La Fig. 1 rappelle schématiquement, selon la technique antérieure, le raccordement de deux câbles Ca et Cb à fibres optiques respectives Fa et Fb par l'intermédiaire de dispositifs de raccordement élémentaires R. Un dispositif de raccordement élémentaire R est appelé dans la suite "raccord" et raccorde l'extrémité d'une fibre optique Fa du premier câble Ca à l'extrémité d'une fibre optique Fb du second câble Cb. La boîte de raccordement BO selon la technique antérieure - dont le contour est représenté par un rectangle en trait fin dans la Fig. 1-est cylindrique. Le fond de la boîte et le couvercle de la boîte forment respectivement des coquilles inférieure et supérieure dont le plan de jonction est dans l'axe d'alignement longitudinal des extrémités face à face des câbles Ca et Cb.

Les fibres Fa et Fb sont épanouies à partir des extrémités dégainées des câbles Ca et Cb. A l'intérieur de la boîte BO, les moyens pour supporter les raccords R sont par exemple composés de circlips dans chacun desquels s'encastre un raccord. Les raccords sont disposés de part et d'autre le long du petit axe médian, ici vertical, de la boîte BO. Entre l'extrémité de chaque câble Ca, Cb et les raccords R, un espace relativement grand peut être prévu pour loger de grands tronçons des fibres optiques Fa, Fb afin que l'opérateur puisse disposer d'une longueur suffisante pour tirer les fibres lors des raccordements.

On décrit maintenant un premier mode de réalisation d'une boîte de raccordement et de brassage selon l'invention qui permet de brasser directement, comme précédemment, les fibres optiques Fa d'un premier ensemble Ea en vue de les raccorder respectivement aux fibres optiques Fb d'un second ensemble Eb, sans l'intermédiaire de jarretières mais plutôt directement par l'intermédiaire de raccords. Pour ce mode de réalisation, les ensembles Ea et Eb de fibres optiques sont composés de plusieurs câbles optiques respectifs $Ca_1$, $Ca_2$,....$Ca_p$,.... $Ca_{p-1}$, $Ca_P$ et $Cb_1$, $Cb_2$,.... $Cb_p$,.... $Cb_{P-1}$, $Cb_P$ où l'indice entier p varie entre 1 et P. Chaque câble $Ca_p$, $Cb_p$ contient M fibres optiques respectives Fa, Fb. Chaque câble peut comprendre par exemple un jonc cylindrique rainuré hélicoïdalement dans chaque rainure duquel est disposée une fibre optique, ou un élément porteur cylindrique central autour duquel les fibres optiques sont enrobées, soit dans un composant gélifiant, soit dans des tubes individuels, ou bien encore, un support plat rainure sur lequel sont maintenues coplanairement en nappe ou ruban les fibres optiques. Plusieurs câbles élémentaires tels que $Ca_p$ ou $Cb_p$ peuvent constituer des sous-câbles qui sont enfermés dans l'enveloppe commune d'un câble composite.

En outre, les raccords ou dispositifs de raccordement élémentaires auxquels fait appel la présente invention sont de préférence des types tels que décrits dans la demande de brevet EP-A-0 103 527 déposée le 14 septembre 1983 et dans la demande de brevet EP-A-0 116 481 déposée le 4 janvier 1984.

Selon la EP-A-0 103 527, un raccord des extrémités de deux fibres optiques Fa et Fb comprend un boîtier qui contient un moyen de support de fibres ayant une rainure centrale pour recevoir les extrémités des fibres et des surfaces d'appui des gaines des fibres de part et d'autre de la rainure, et qui contient également des premiers moyens pour presser les extrémités des fibres dans la rainure et des seconds moyens pour presser les gaines des fibres sur les surfaces d'appui. Les premiers et seconds moyens de pressage sont montés à coulissement dans le boîtier au dessus du moyen de support et sont rappelés contre le moyen de support par des moyens élastiques respectifs.

Selon la EP-A-0 116 481, un raccord des extrémités de deux fibres Fa et Fb comprend une embase ayant une rainure centrale pour recevoir les extrémités des deux fibres, et des moyens de pressage des extrémités des fibres dans la rainure. Les moyens de pressage sont constitués par une plaque-ressort, par exemple en U, dont une première extrémité applique par sa flexion propre les extrémités des fibres dans la rainure et dont la seconde extrémité est solidaire de l'embase.

Ces types de raccord présentent principalement les avantages suivants:

- bonne qualité de transmission optique au niveau de la jonction des extrémités des fibres optiques et fiabilité élevée malgré la simplicité relative de leur structure et de leur manipulation;

- la réalisation d'un raccordement ne fait pas appel à une main d'oeuvre différente de celle employée pour les épissures de conducteurs de câbles électriques, et est très rapide du fait qu'aucun démontage des pièces composant le raccord n'est nécessaire; et corollairement, simplicité de l'outillage nécessaire aux raccordement et coût du raccordement réduit;

- réversibilité de la connexion optique, c'est-à-dire possibilité de déconnecter et de connecter à nouveau des fibres optiques un grand nombre de fois au moyen du même raccord sans aucun démontage et remplacement des pièces du raccord; la forme parallélépipédique mince des raccords permet de réaliser empilages de très faibles encombrements dans lesquels l'épaisseur de l'espace imparti à un raccord est de l'ordre de 4 à 5 mm.

Concernant le dernier avantage, les raccords parallélépipédique minces sont enfichés entre des cloisons parallèles, de préférence amovibles, qui sont fixés sur un support plan S formant un barrette compacte parallélépipédique. Le support S comporte entre deux cloisons voisines des pattes, languettes, bossages, ou analogues flexibles pour verrouiller un raccord, par exemple au moyen de deux encoches latérales du raccord. Un tel empilage de raccord présente ainsi un encombrement réduit et permet, le cas échéant, de raccorder des fibres optiques sans aucun retrait des raccords du fait que des extrémités des moyens de pressage des raccords sont accessibles par le dessus de la barrette S au moyen d'un outil de maniement simple.

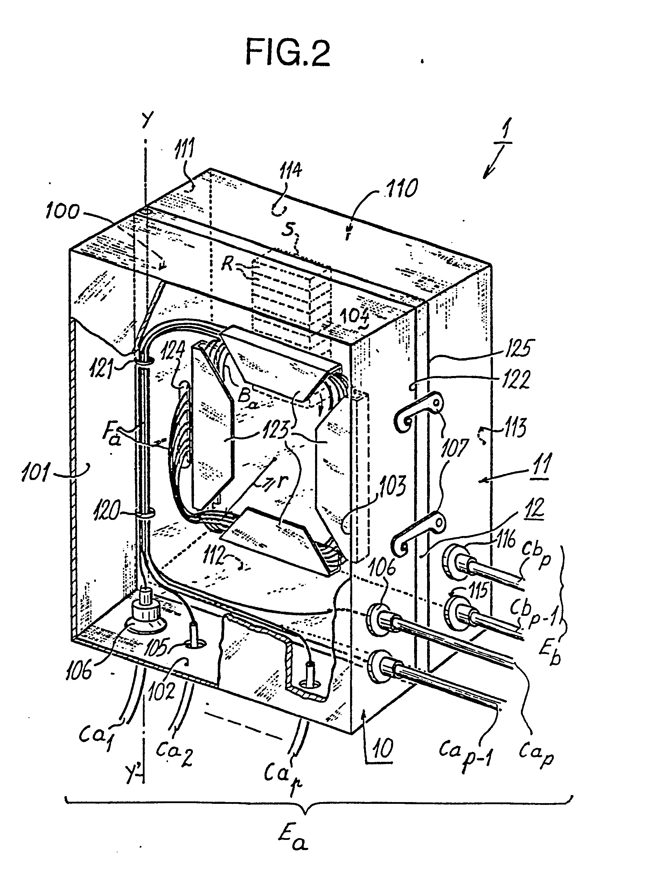

Une boîte de raccordement et de brassage direct 1 selon l'invention est montrée à la Fig. 2. On y retrouve des premiers câbles $Ca_1$ à $Ca_P$ du premier ensemble Ea, des second câbles $Cb_1$ à $Cb_P$ du second ensemble Eb, des raccords R et une barrette S tels que décrits ci-dessus.

La boîte 1 est parallélépipédique. Elle comprend un premier réceptacle 10, un second réceptacle 11 et un panneau amovible 12. Le premier réceptacle 10 et le second réceptacle 11 forment le fond et le couvercle de la boîte 1 et sont superposables. Le panneau 12 forme une cloison rectangulaire entre le fond et le couvercle et partage ainsi la boîte en un premier compartiment arrière parallélépipédique 100 qui est délimité par les parois du fond 10, et en un second compartiment avant parallélépipédique 110 qui est délimité par les parois du couvercle 11. Le panneau 12 peut être fixé sur les chants avant du fond ou sur les chants arrière du couvercle. De préférence, le panneau est monté sur le fond afin de rendre plus accessible les raccords R de la barrette S contenue dans le compartiment avant 110. Le panneau 12 peut être fixé aux chants avant du fond par vissage, encliquetage ou analogue ou de préférence peut être monté à pivotement autour de l'axe d'articulation Y'Y d'une charnière le long du bord avant d'une paroi du fond 10, tel que le côté 101 montré à la Fig. 2. Dans ce dernier cas, le panneau 12 est pivoté vers l'extérieur du fond 10 autour de l'axe Y'Y pour lover les fibres optiques Fa et ensuite est rabattu contre des butées aux voisinages des bords des trois autres côtés 102, 103 et 104 du fond 10.

Les premiers câbles Ca à Ca pénètrent dans le compartiment arrière 100 à travers des trous 105 qui sont prévus dans au moins l'un des côtés, tel que 102, du fond 10 adjacent au côté 101 supportant la charnière du panneau 12, et de préférence, dans les trois côtés 102 103 et 104. Les trous 105 sont éventuellement équipés chacun d'un presse-étoupe 106, par exemple du genre manchon en caoutchouc, dans lequel s'enfile une extrémité gainée du câble respectif Ca et qui rend étanche la liaison entre le câble et la boîte. Après dégainage des câbles $Ca_1$ à $Ca_P$ sur une grande longueur à partir des faces internes des côtés du fond 10, et éventuellement tronçonnage des éléments porteurs des câbles s'ils existent devant lesdites faces internes, les fibres optiques Fa des câbles $Ca_1$ à $Ca_P$ sont dégagées et sont ensuite réunies en faisceau.

Les fibres Fa sortant des câbles $Ca_1$ à $Ca_P$ sont glissées dans des moyens de guidage rectiligne 120-121 qui sont parallèles et adjacents à l'axe de pivotement Y'Y du panneau 12 et qui sont fixés sur la face arrière 122 du panneau 12. Les moyens de guidage rectiligne peuvent être constitués par au moins deux tronçons de tube ou deux anneaux de préférence fendus 120 et 121 ayant leur axe aligné et paralléle à l'axe Y'Y. La distance entre les anneaux extrêmes 120 et 121 montrés à la Fig. 2 peut être égale à environ 400 fois le diamètre nominal d'une fibre optique afin que les fibres optiques Fa puissent travailler en flexion-torsion.

Après le guidage rectiligne dans les moyens de guidage 120-121, ici de bas en haut, le faisceau des fibres optiques Fa est ensuite lové "en galette", c'est-à-dire à plat, contre la face arrière 122 du panneau 12 en plusieurs boucles d'aisance Ba pratiquement circulaires et superposées. Les boucles Ba permettent à l'opérateur de disposer de longueurs suffisantes des fibres Fa pour préparer les extrémités des fibres et les introduire dans les raccords R. Les boucles Ba constituent des réserves de fibres en cas d'incident entraînant l'obligation de refaire des raccordements ou de couper à nouveau les extrémités de fibres. Afin de lover convenablement les fibres Fa sans embrouille, c'est-à-dire de ne point entremêler les fibres et de les maintenir en un faisceau curviligne ayant un rayon de courbure minimum de r = 50 mm, des gouttières coplanaires 123 à section transversale en U sont prévues sur la face arrière 122 du panneau 12. Par exemple, comme montre a la Fig. 2, quatre gouttières 123 sont disposées le long des côtés d'un carré qui enferme un cercle d'un rayon supérieur à r. Les gouttières peuvent être disposées le long d'une courbe fermée autre que carrée, telle que rectangulaire, polyétrique ovale ou analogue. Les branches libres des gouttières 123 vers l'intérieur du compartiment arrière 100 sont profilées en trapèze isocèle et sont disjointes afin de permettre l'insertion des fibres Fa et leur maintien en boucles d'aisance Ba. A la place des gouttières ou conjointement à celles-ci peuvent être utilisées des attaches rapides en forme d'anneau qui entourent le faisceau des fibres Fa et dont les tiges avant sont encliquetées dans des trous répartis circulairement sur la face arrière 122 du panneau 12. Dans la Fig. 2, on n'a représenté que quelques boucles d'aisance Ba du faisceau des fibres Fa afin de ne pas surcharger le dessin, bien qu en pratique, une dizaine de boucles d'aisance puisse être formée pour chaque fibre optique en tournant suivant le sens des aiguilles d'une montre.

Les fibres optiques Fa sont ensuite tirées, ici à partir de la gouttière inférieure 123, à travers un orifice oblong 124 du panneau 12 entre les moyens de guidage 120-121 et la surface de lovage arrière définie par les boucles d'aisance Ba. L'orifice 124 est par exemple pratiqué à mi-hauteur entre les anneaux alignés 120 et 121 et le fond de la gouttière verticale de gauche 123, comme montré à la Fig. 2. Le faisceau des fibres Fa débouche ainsi sur la face avant 125 du panneau 12 avec une longueur suffisante pour permettre l'insertion des fibres Fa dans les raccords R. Après les opérations précédentes, le panneau 12 pivote autour de l'axe Y'Y et est rabattu sur la face avant du fond 10 pour fermer le compartiment arrière 100 et y être maintenu à cette position par un dispositif de verrouillage adéquat. Le dispositif de verrouillage peut être constitué par un ou plusieurs loqueteaux qui sont fixés sur le chant avant du fond 10 recevant en butée le chant libre du panneau parallèle et opposé à l'axe Y'Y. Deux tels loqueteaux sont montrés schématiquement en 107 dans la fig. 2.

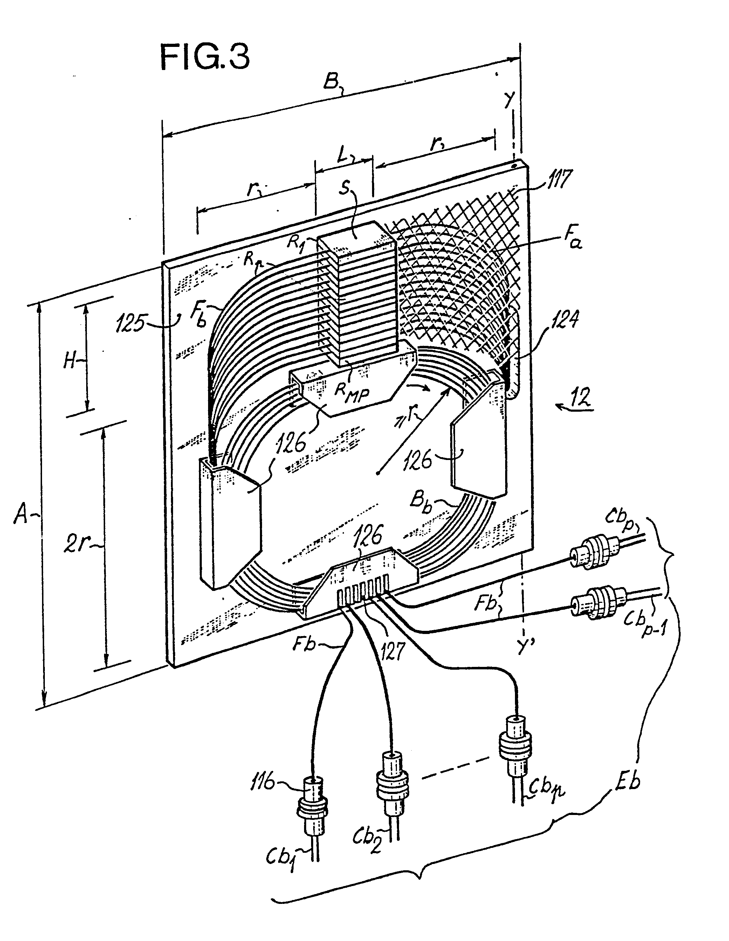

Sur la face avant 125 du panneau 12 montrée à la Fig. 3, on retrouve en partie supérieure la pile de raccords $R_1$ à $R_{MP}$ encastrés entre les cloisons de la barrette S. La barrette S est fixée verticalement sur la face avant 125 par exemple par vis. Comme déjà dit, les raccords R sont conformes à l'un de ceux décrits dans la EP-A-0 103 527 et la EP-A-0 116 481. Les grandes faces rectangulaires des raccords R sont disposées horizontalement. Les chants verticaux des raccords R donnant accès aux moyens de pressage en vue de dégager les rainures et d'y enfiler les extrémités des fibres sont en face de la grande face interne du couvercle 11.

Les extrémités des tronçons extrêmes des fibres Fa débouchant de l'orifice 124 sont enfilées dans une première moitié des rainures des raccords R, à raison d'une fibre Fa par raccord. Le nombre de raccords R est égal ou supérieur au nombre total M x P des fibres contenues dans un ensemble Ea, Eb. De préférence, les premiers câbles Ca constituent des câbles "précâblés", ce qui signifie qu'à chaque fibre Fa du premier ensemble Ea est assigné définitivement un raccord R, le brassage des raccordements s'effectuant par le choix variable d'un raccord R pour chacune des fibres optiques Fb du second ensemble Eb. Afin de protéger les fibres "précâblées" Fa dans le compartiment avant 110, des grilles de protection 117 recouvrent les tronçons extrêmes des fibres Fa après insertion dans les raccords R et sont fixées à la face avant 125 du panneau. Ainsi, après précâblage des fibres Fa, toutes les opérations, notamment relatives au brassage, s'effectuent dans le compartiment avant 110, le panneau rabattu 12 contre le fond 10 protégeant les fibres Fa.

L'opérateur procède ensuite au lovage à plat et à l'insertion des fibres Fb dans les raccords R. En premier lieu, les seconds câbles $Cb_1$ à $Cb_P$ sont passés dans des trous 115 qui sont prévus dans au moins l'un des côtés 111, 112, 113 et 114 du couvercle 11 et qui sont éventuellement équipés chacun d'un presse-étoupe 116, comme montré à la Fig. 2. Après épanouissement des fibres Fb des seconds câbles dans le compartiment avant 110, d'une manière analogue à celui des fibres Fa, les fibres Fb sont réunies en un faisceau qui est lové à plat en des boucles d'aisance pratiquement circulaires et superposées Bb suivant le sens contraire de celui des boucles Ba des fibres Fa qui sont lovées à contre, vues de la face avant 125 du panneau 12. Les boucles Bb permettent de disposer de surlongueurs suffisantes de fibres Fb pour effectuer commodément la préparation des extrémités des fibres Fb et leur insertion dans les moitiés - à gauche dans la Fig. 3 - des rainures des raccords, et également permettent de palier aux éventuels incidents provoquant une réprise de raccordement et de réaliser le brassage. Le brassage consiste par exemple à retirer l'extrémité d'une fibre Fb qui est initialement insérée dans un raccord tel que $R_1$, et à l'insérer dans un autre raccord tel que $R_P$ (Fig. 3).

L'aire de lovage des fibres Fb est délimitée en partie basse de la face avant 125 du panneau 12, sous la barrette S, par quatre gouttières coplanaires 126 qui ont une disposition mutuelle en carré analogue à celle des gouttières 123 sur la face arrière 122 du panneau. Chaque gouttière 126 a également une section en U dont la grande branche avant libre est profilée en trapèze isocèle et dont la petite branche rectangulaire est fixée sur la face avant 125 du panneau 12 dans l'aire de lovage des fibres Fb. Comme montré à la Fig. 3, les fibres Fb sortent des extrémités des seconds câbles $Cb_1$ à $Cb_P$ au niveau des presse-étoupes 116 dans les côtés du couvercle 11 pénètrent dans l'aire de lovage à travers des fentes verticales 127 de la branche trapézoïdale de la gouttière horizontale inférieure 126, puis sont lovées dans les quatre gouttières 126 en plusieurs boucles d'aisance Bb et enfin sortent de l'extrémité supérieure de la gouttière verticale de gauche 126 en vue de l'introduction des extrémités des fibres Fb dans les moitiés de gauche des rainures des raccords R.

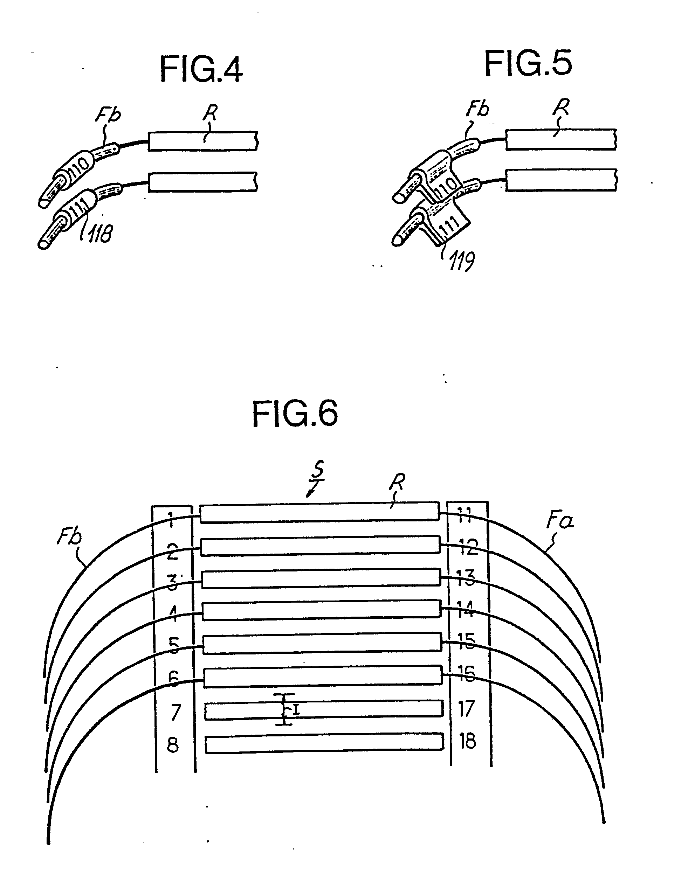

Le repérage des fibres Fa, Fb peut être réalisé au moyen de bagues 118 montrées à la Fig. 4, ou au moyen de drapeaux 119 montrés à la Fig. 5 enfilés chacun autour de l'extrémité gainée d'une fibre Fa, Fb et comportant un numéro respectif, ou bien encore au moyen d'un numérotage à proximité des deux extrémités des raccords R dans la barrette S comme montré à la Fig. 6. Lorsque toutes les extrémités des fibres Fb sont insérées dans les raccords respectifs R, le couvercle 11 est superposé au fond 10 et fixé sur celui-ci par vissage, encliquetage ou analogue.

L'un des avantages de l'organisation interne des fibres dans la boîte de raccordement et de brassage direct 1 est le faible encombrement de la boîte. Pour fixer les idées en référence à la Fig. 3, les dimensions en hauteur A et largeur B d'une boîte, c'est-à-dire du panneau 12 et des grandes faces du fond 10 et du couvercle 11, peuvent être calculées comme suit pour un raccordement des fibres deux à deux de deux ensembles Ea et Eb contenant chacun P = 5 câbles à M = 10 fibres chacun:

- largeur de la barrette: L = 40 mm;
- hauteur de l'intervalle disponible pour un raccord: l = 5 mm (Fig. 6);
- hauteur (longueur) de la barrette contenant M.P = 50 raccords H = l (M.P + 1), soit H = 5 (10.5 + 1) = 255 mm;
- tolérance sur la hauteur A: $\varepsilon$ = 10 mm;
- hauteur A de la boîte: A = (H + 2r) + $\varepsilon$, soit A = 255 + 100 + 10 = 365 mm
- tolérance sur la largeur B: 3 $\varepsilon$ = 30 mm;
- largeur B de la boîte: B = (L + 2r) + 3 $\varepsilon$, soit B = 40 + 100 + 30 = 170 mm.

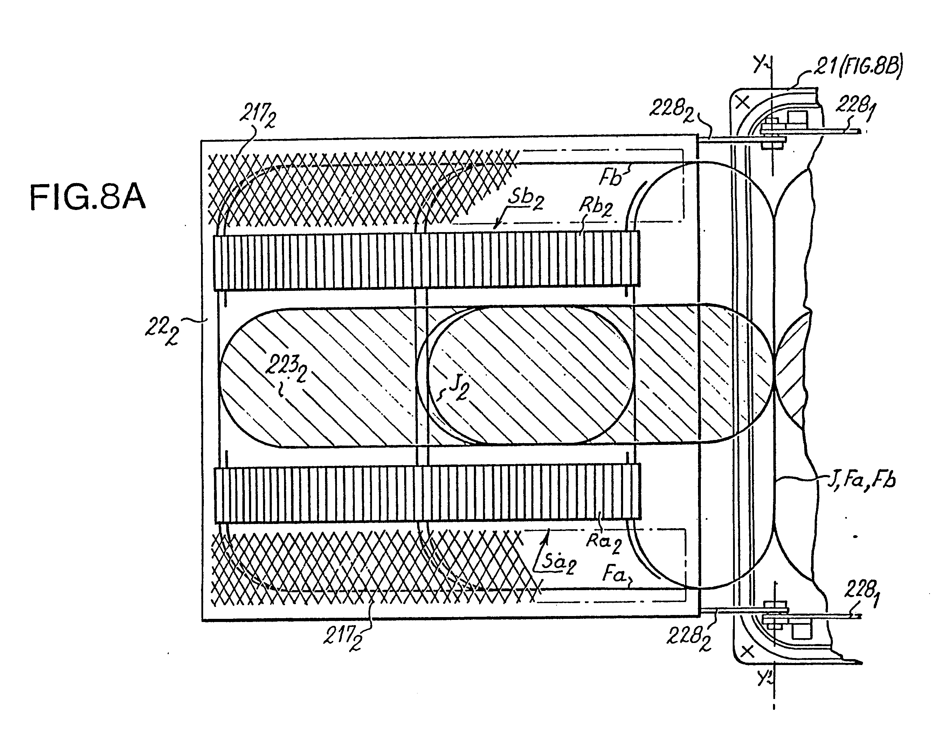

Le second mode de réalisation d'une boîte de raccordement et de brassage selon l'invention a trait à un brassage entre plusieurs câbles Ca et Cb, comme montré schématiquement à la Fig. 7. Les fibres Fa, Fb de chaque câble Ca Cb sont introduites respectivement dans des raccords Ra, Rb d'une barrette respective Sa, Sb. Chaque raccord Ra est ensuite relié à l'un des raccords Rb par une jarretière J qui est constituée par une fibre optique et qui est disposée dans l'espace compris entre les deux barrettes parallèles Sa et Sb.

Le procédé de brassage par jarretières double le nombre de raccordements à effectuer et, par conséquent, double sensiblement la durée et le coût de l'opération pour un nombre de raccordements égal à celui du procédé à brassage "direct" (Fig. 1). Cependant, le brassage par jarretières permet avantageusement de précâbler définitivement les fibres Fa et Fb dans les raccords respectifs Ra et Rb, c'est-à-dire d'assigner définitivement chaque fibre entrant dans la boîte à un raccord. Le raccordement d'une fibre Fa d'un premier câble Ca à une fibre Fb d'un second câble Cb est réalisé séparément par une jarretière J et à la demande. Les jarretières sont plus faciles à manipuler et à ranger dans des aires de lovage que les fibres des câbles. Sans aucune intervention ultérieure sur la disposition relative des fibres précâblées Fa, Fb, tout raccordement entre une fibre quelconque Fa et une fibre quelconque Fb peut être effectué soit en réutilisant une jarretière déjà dans la boîte, soit en introduisant une nouvelle jarretière ou une jarretière libre et en déconnectant les extrémités des jarretières initiales reliées aux fibres à raccorder.

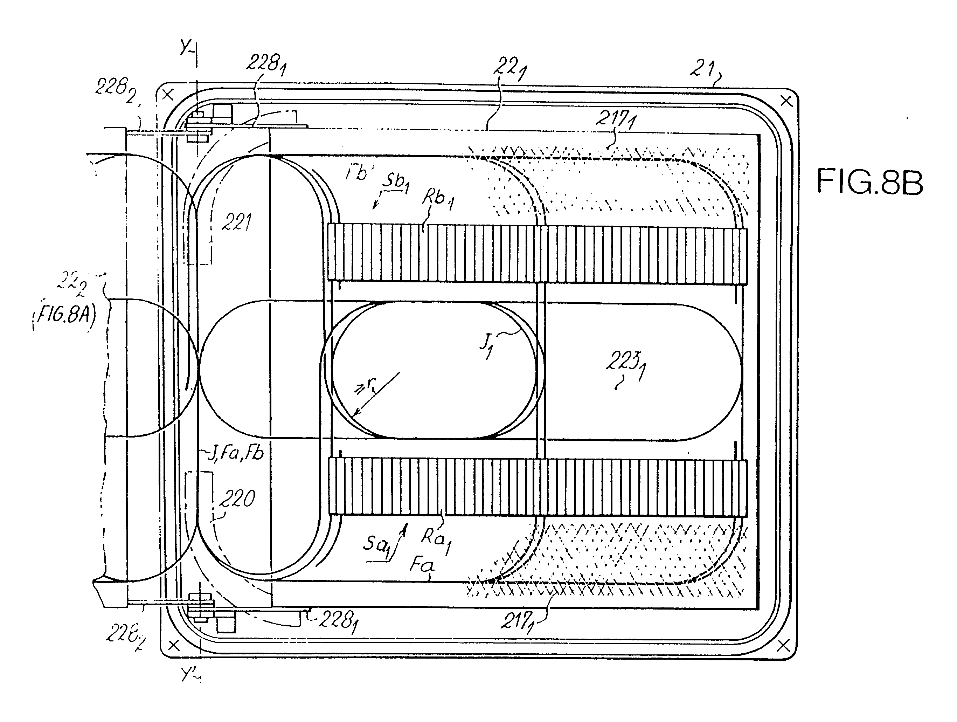

La boîte de raccordement et de brassage par jarretières 2 montrée aux Figs. 8 à 10 est prévue pour raccorder une fibre Fa, Fb d'un quelconque câble Ca, Cb parmi une pluralité de câble à une fibre optique Fa, Eb d'un autre câble de cette pluralité de câbles. Elle est également parallélépipédique et est constituée par un couvercle 20 et un fond 21. La boîte renferme dans un "second" compartiment 200 plusieurs panneaux montés à pivotement autour d'un axe vertical Y'Y solidaire du fond 21 et disposé dans un coin vertical, ici à gauche, du fond. Dans les Figs. 8 à 10 on a supposé que la boîte 2 renferme deux panneaux amovibles $22_1$ et $22_2$. Chaque panneau $22_1$, $22_2$ comporte deux bras $228_1$, $228_2$ qui sont articulés autour de l'axe Y'Y sans translation le long de cet axe et qui sont coudés de telle sorte que les panneaux puissent être disposés parallèlement aux grandes faces du couvercle 20 et du fond 21 lorsque la boîte est fermée. Lorsque la boîte est ouverte, chaque panneau peut pivoter de 180° environ vers l'extérieur du fond 21.

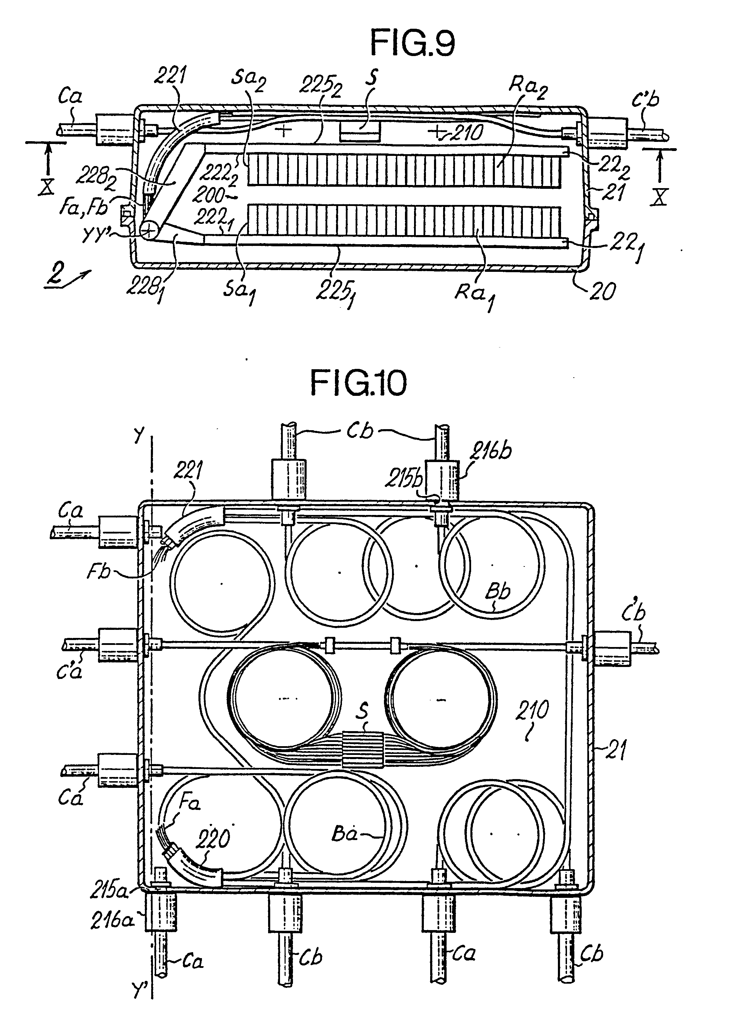

Sur l'une des grandes faces rectangulaires verticales $222_1$, $222_2$ de chaque panneau $22_1$, $22_2$ sont fixées parallèlement deux barrettes horizontales $Sa_1$ et $Sb_1$, $Sa_2$ et $Sb_2$, de raccords $Ra_1$ et $Rb_1$, $Ra_2$ et $Rb_2$. Entre les deux barrettes sur un même panneau est prévue une aire de lovage $223_1$, $223_2$ de jarretières $J_1$, $J_2$ pour raccorder chacune un raccord de l'une des deux barrettes à un raccord de l'autre barrette. De préférence, comme montré à la Fig.9, des panneaux tels que $22_1$ et $22_2$ aux extrémités de l'empilement des panneaux ont des grandes faces $225_1$ et $225_2$ respectivement en vis-à-vis des faces internes du couvercle 20 et du fond 21 qui ne supportent aucune barrette de raccords.

Sur les aires de lovage $223_1$, $223_2$ des jarretières $J_1$, $J_2$ sont prévus un ou plusieurs ensembles de gouttières (non représentés) tels ·que ceux montrés aux Figs. 2 et 3, afin de réaliser les boucles d'aisance des jarretières ayant un rayon au moins égal à r = 50 mm. En effet, la longueur d'une jarretière est variable et dépend de son chemin suivi entre deux raccords à relier qui peuvent être soit sur un même panneau, soit sur deux panneaux respectifs parmi la pluralité de panneaux. Lorsqu'une jarretière relie deux raccords sur des panneaux différents, la jarretière sortant de l'aire de lovage de l'un des panneaux chemine dans des moyens de guidage 220-221, à tubes ou à anneaux, qui sont pour partie solidaires de l'un des panneaux, pour partie solidaires du fond 21 et pour partie solidaires de l'autre panneau, comme montré aux Figs 8A et 8B. Ces moyens de guidage permettent un passage rectiligne des jarretières le long de l'axe vertical Y'Y de pivotement des panneaux. Les moyens de guidage servent également à acheminer vers les raccords respectifs les tronçons extrêmes des fibres optiques Fa et Fb qui peuvent être protégés par des grilles $217_1$ et $217_2$ montrées aux Figs. 8A et 8B.

Comme montré à la Fig. 9, les panneaux rabattus vers le fond 21 laissent un "premier" compartiment libre 210 entre la grande face interne du fond 21 et le dernier panneau tel que $22_2$ en vis-à-vis de celle-ci. Le compartiment 210 montré à la Fig. 10 est disponible pour le lovage des fibres entrantes Fa et Fb et accessible par pivotement des panneaux vers l'extérieur du fond 21. Les câbles Ca, Cb à raccorder pénètrent à travers des trous 215a, 215b équipés de presse-étoupes 216a, 216b et pratiqués dans les quatre côtés du fond 21. Dès leur entrée dans le fond, les câbles sont dégainés, mais leur élément porteur flexible, s'il existe, n'est pas scié · immédiatement. Les éléments porteurs flexibles avec leurs fibres sont lovés à plat contre la grande face interne du fond 21 en des boucles d'aisance Ba, Bb dont le rayon est au moins égal à r = 50 mm et qui sont maintenues par des ensembles de gouttières (non représentés) analogues à ceux montrés aux Figs. 2 et 3. les éléments porteurs ne sont sciés qu'en sortie des ensembles de gouttières où les fibres Fa et Fb sont acheminées par passage rectiligne dans les moyens de guidage 220-221 le long de l'axe de pivotement Y'Y, vers les raccords respectifs sur les panneaux.

Certains câbles, tels que C'a et C'b, n'ont pas besoin d'être brassés, mais peuvent être seulement raccordés deux à deux. Dans ce cas, comme montré au centre de la Fig. 10, la face interne du fond 21 supporte une barrette S de raccord pour un brassage direct ainsi que des gouttières (non représentées) pour lover les fibres de ces câbles en boucles d'aisance ayant un rayon au moins égal à r = 50

On notera que dans les Figs. 8 à 10 n'ont pas été détaillés les moyens auxiliaires pour guider, lover et repérer les fibres et jarretières afin de ne pas surcharger les figures. Ces moyens sont pratiquement analogues à ceux décrits pour la boîte de brassage direct 1 qui peut également contenir plusieurs panneaux qui pivotent autour du même axe et qui supportent chacun des moyens de guidage et de l'ovage et une barrette de raccord pour le brassage direct des fibres de deux ensembles respectifs.

La barrette de raccord sur le panneau 12 de la boîte de brassage direct 1 peut être remplacée par deux barrettes parallèles de raccord en vue d'effectuér un brassage par jarretières. Dans ce cas, chaque raccord d'une barrette permet de relier une fibre optique de l'ensemble respectif Ea, Eb à une jarretière J dont l'autre extrémité est insérée dans un raccord de l'autre barrette. La face avant 125 du panneau 12 (Fig. 3) est analogue à la face $222_1$, $222_2$ d'un panneau 22, $22_2$ (Figs. 8 et 9) et supporte des pièces coplanaires en forme de gouttière ou d'anneau qui sont équiréparties autour d'un ou de plusieurs cercles et qui contiennent les boucles des jarretières lovées à plat entre les deux barrettes.

## Revendications

1 - Boîte de raccordement et de brassage de premier et second ensembles (Ea, Eb; Ca, Cb) de fibres optiques (Fa, Fb; Fa, J-Fb) permettant des modifications de connexion entre fibres des deux ensembles, ladite boîte étant composée d'un premier réceptacle (10; 21) et d'un second réceptacle (11; 20) superposables, et la boîte contenant plusieurs premiers dispositifs de raccordement (R; Ra) pour raccorder chacun l'extrémité d'une fibre optique (Fa) du premier ensemble (Ea; Ca) et l'extrémité d'une fibre optique (Fb, J-Fb) du second ensemble (Eb; Cb), et un panneau amovible (12; 22), caractérisée en ce que le panneau amovible (12; 22) divise l'intérieur de la boîte (1; 2) en un premier compartiment (100 210) qui contient des boucles de lovage (Ba) des fibres (Fa) du premier ensemble (Ea; Ca) lesquelles fibres (Fa) pénètrent dans ladite boîte à travers au moins un trou (105; 215a) du premier réceptacle (10; 27), et en un second compartiment (110, 200) qui contient des boucles de lovage individuelles (Bb ou J) des fibres (Fb; J-Fb) du second ensemble (Eb; Cb), le second ensemble (Eb; Cb) pénétrant à travers au moins un second trou (115; 215b) dans la boîte, et les premiers dispositifs de raccordement (R; Ra) des tronçons extrêmes des fibres lovées (Fa) du premier ensemble (Ea; Ca) dont les extrémités sont insérées respectivement dans les dispositifs de raccordement (R; Ra) après avoir traversé ou contourné le panneau (12; 22) et des tronçons extrêmes des fibres lovées du second ensemble qui sont également insérées respectivement dans lesdits premiers dispositifs de raccordement (R; Ra).

2 - Boîte conforme à la revendication 1, caractérisée en ce que le panneau (12) est fixable à l'un des réceptacles (10, 11), de preference au premier réceptacle (10).

3 - Boîte conforme à la revendication 1, caractérisée en ce que le panneau (12) est monté à pivotement (Y'Y) sur l'un des réceptacles (10, 11), de préférence sur le premier réceptacle (10),

4 - Boîte conforme à l'une des revendications 1 à 3, caractérisée en ce que les fibres (Fa) de l'un (Ea) des ensembles et les fibres (Fb) de l'autre ensemble (Eb) sont respectivement lovées et lovées contre.

5 - Boîte conforme a l'une des revendications 1 à 4, caractérisée en ce que les premier et second compartiments (100, 110) contiennent chacun des pièces coplanaires en forme de gouttière ou en forme d'anneau (123, 126) qui sont équiréparties le long d'une courbe fermée polyédique, ovale ou analogue et qui maintiennent les boucles (Ba, Bb) des fibres (Fa, Fb) de l'ensemble respectif (Ea, Eb).

6 - Boîte conforme aux revendications 3 et 5, caractérisée en ce qu'elle contient des moyens (120, 121) fixés sur la face (122) du panneau (12) délimitant le premier compartiment (100) pour guider rectilignement les fibres (Fa) du premier ensemble (Ea) sensiblement parallèlement à l'axe de pivotement (Y'Y) du panneau (12) avant lovage desdites fibres en boucles (Ba).

7 - Boîtes conforme à la revendication 5 ou 6, caractérisée en ce que lesdites pièces en forme de gouttière ou d'anneau (123, 126) dans chaque compartiment (100, 110) sont fixées sur la face (112, 125) dudit panneau (12) délimitant ledit compartiment (100, 110).

8 - Boîte conforme à la revendication 5 ou 6, caractérisée en ce que l'ensemble desdites pièces en forme de gouttière ou d'anneau (126) dans le second compartiment (110) et les premiers dispositifs de raccordement sont fixés et juxtaposés sur la face (125) dudit panneau (12) délimitant le second compartiment (110).

9 - Boîte conforme à l'une des revendications 5 à 8, caractérisée en ce que les fibres (Fb) du second ensemble (Eb) passent à travers des fentes (127) d'une pièce en forme de gouttière ou d'anneau dans le second compartiment (200) avant leur lovage en boucles (Bb) dans les pièces (126) du second compartiment (110).

10 - Boîte conforme à l'une des revendications 1 à 9, caractérisée en ce que les premier et second ensembles (Ea, Eb) de fibres optiques (Fa, Fb) sont constitués chacun de câbles de fibres optiques (Ca$_1$ à Ca$_p$ Cb$_1$ à Cb$_p$) qui traversent des trous (105, 115) dans des côtés du réceptacle respectif (10, 11) et dont les fibres sont rassemblées en faisceau (Fa, Fb) dans le compartiment respectif (100, 110).

11 - Boîte conforme à l'une des revendications 1 à 10, caractérisée en ce que les premiers dispositifs de raccordement (R) sont remplacés par deux séries de dispositifs de raccordement (Ra, Rb) qui recoivrent chacun l'extrémité d'une fibre optique (Fa, Fb) d'un ensemble respectif (Ea, Eb), et par des jarretières sous forme de fibres optiques (J) ayant chacune deux extrémités reçues dans des dispositifs de raccordement (Ra, Rb) des deux séries pour relier chacune l'une des fibres (Fa) du premier ensemble (Ea) à l'une des fibres (Fb) du second ensemble (Eb).

12 - Boîte conforme à la revendication 11, caractérisé en ce que les jarretières (J) sont lovées à plat en boucles dans le second compartiment (110), de préférence entre les deux séries de dispositifs de raccordement (Ra, Rb).

13 - Boîte conforme à la revendication 12, caractérisé en ce qu'elle contient des pièces coplanaires en forme en forme de gouttière ou d'anneau qui sont équiréparties le long d'une courbe fermée polyédrique, ovale ou analogue et qui maintiennent les boucles de jarretières (J).

14 - Boîte conforme à la revendication 1, caractérisée en ce que les boucles de lovage du second ensemble se subdivisent en une première et une seconde boucles, en ce que le second compartiment (200) contient des seconds dispositifs àe raccordement (Rb) pour raccorder chacune des extrémités de premières et secondes boucles (J, Bb) d'une fibre optique (Fb) du second ensemble (Cb), en ce que les premières boucles des fibres (J-Fb) du second ensemble sont contenues dans le second compartiment (200) et sont constituées par des boucles de lovage de jarretières (J) sous forme de fibres optiques raccordées respectivement au reste des secondes fibres optiques (Fb) au moyen des seconds dispositifs de raccordement (Rb), et en ce que les secondes boucles de lovage (Bb) des secondes fibres (Fb) sont contenues dans le premier compartiment (210), et le second trou (215b) est prévu dans le premier réceptacle (21).

15 - Boîte conforme à la revendication 14, caractérisée en ce que les deux séries (Sa, Sb) de premiers et seconds dispositifs de raccordement sont fixées, de préférence parallèlement, sur une même face (222) du panneau (22) et en ce que les boucles des jarretières (J) sont disposées dans une aire de lovage (223) entre lesdites séries (Sa, Sb).

16 - Boîte conforme à la revendication 15, caractérisée en ce que ladite face (222) du panneau (22) supporte des pièces coplanaires en forme de gouttière ou d'anneau qui sont équiréparties le long de plusieurs courbes fermées polyèdriques, ovales ou analogues dans l'aire de lovage (223) et qui maintiennent les boucles de jarretières (J).

17 - Boîte conforme à l'une des revendications 14 à 16, caractérisée en ce qu'elle contient des pièces coplanaires en forme de gouttière ou d'anneau qui sont fixées à l'intérieur du premier réceptacle (21), qui sont équiréparties autour de plusieurs courbes fermées polyèdriques, ovales ou analogues et qui maintiennent les boucles (Ba, Bb) des fibres (Fa) du premier ensemble (Ca) et des fibres (Fb) du second ensemble (Cb).

18 - Boîte conforme à l'une des revendications 14 à 17, caractérisé en ce que chaque ensemble (Ca, Cb) avec des éléments porteurs flexibles supportant les fibres (Fa, Fb) est lové en boucles (Ba, Bb) dans le premier compartiment (210).

19 - Boîte conforme à l'une des revendications 14 à 18, caractérisée en ce qu'elle contient des moyens (220, 221) pour guider les fibres optiques (Fa, Fb) des ensembles sensiblement lignement et parallèlement au panneau (12), entre le second compartiment (210) et le premier compartiment (200).

20 - Boîte conforme à l'une des revendications 14 à 18, caractérisée en ce qu'elle comprend plusieurs panneau amovibles, de préférence parallèles (22$_1$, 22$_2$), qui sont contenus dans le second compartiment (200) et qui supportent chacun deux séries (Sa$_1$, Sb$_1$; Sa$_2$, Sb$_2$) de premiers et seconds dispositifs de raccordement assignées aux deux ensembles respectifs de fibres optiques (Ca, Cb).

21 - Boîte conforme aux revendications 19 et 20, caractérisée en ce que les moyens (220, 221) pour guider les fibrés optiques (Fa, Fb) guident également des jarretières (J) entre des premiers et seconds dispositifs de raccordement supportés par des panneaux différents (22$_1$, 22$_2$).

22 - Boîte conforme à la revendication 20 ou 21, caractérisée en ce que les panneaux (22$_1$, 22$_2$) sont montés à pivotement (Y'Y) sur l'un des réceptacles (20, 21), de preference sur le premier réceptacle (21).

23 - Boîte de raccordement conforme aux revendications 20 et 22, caractérisée en ce que le guidage rectiligne est sensiblement colinéaire à l'axe de pivotement (Y'Y) des panneaux (22$_1$, 22$_2$).

24 - Boîte conforme à l'une des revendications 14 à 22, caractérisée en ce que le second réceptacle (21) supporte des dispositifs de raccordements (S) qui raccordent directement chacun l'extrémité d'une fibre d'un ensemble (C'a) à l'extrémité d'une fibre d'un autre ensemble (C'b).

25 - Boîte conforme à l'une des revendications 1 à 24, caractérisée en ce que chaque dispositif de raccordement (R) des extrémités de deux fibres optiques (Fa, Fb ou J) comprend un boîtier qui contient un moyen de support de fibres ayant une rainure centrale pour recevoir les extrémités des fibres, et des surfaces d'appui des gaines des fibres de part et d'autre de la rainure, et qui contient des premiers moyens pour presser les extrémités des fibres dans la rainure et des seconds moyens pour presser les gaines des fibres sur les surfaces d'appui, les premiers et seconds moyens de pressage étant montés à coulissement dans le boîtier au-dessus de moyen de support et étant rappelés contre le moyen de support par des moyens élastiques respectifs.

26 - Boîte conforme à l'une des revendications 1 à 24, caractérisée en ce que chaque dispositif de raccordement (R) des extrémités de deux fibres optiques (Fa, Fb ou J) comprend une embase ayant une rainure centrale pour recevoir les extrémités des deux fibres, et des moyens de pressage des extrémités des fibres dans la rainure qui sont constitués par une plaque-ressort dont une première extrémité applique par sa seconde extrémité est solidaire de l'embase.

27 - Boîte conforme à l'une des revendications 1 à 26, caractérisée en ce que les dispositifs de raccordement (R) sont empilés parallèlement au(x) panneau(x) (12, 22).

28 - Boîte conforme à la revendication 27, caractérisée en ce qu'un empilement de dispositifs de raccordement (R) comprend un support plan (S) dans lequel s'enfichent les dispositifs de raccordement (R).

**Patentansprüche**

1. Gehäuse zum Verbinden und zum Vermischen erster und zweiter Gruppen (Ea, Eb; Ca, Cb) optischer Fasern (Fa, Fb; Fa, J-Fb), das Verbindungsmodifikationen zwischen Fasern der beiden Gruppen gestattet, wobei das Gehäuse aus einem ersten Behälter (10; 21) und aus einem zweiten Behälter (11, 20) besteht, die übereinander anordenbar sind, und wobei das Gehäuse mehrere erste Verbindungsvorrichtungen (R; Ra) enthält, um jeweils das Ende einer optischen Faser (Fa) der ersten Gruppe (Ea; Ca) und das Ende einer optischen Faser (Fb; J-Fb) der zweiten Gruppe (Eb; Cb) und eine bewegliche Platte (12; 22) zu verbinden, dadurch gekennzeichnet, daß die bewegliche Platte (12; 22) den Innenraum des Gehäuses (1; 2) in einen ersten abgeteilten Raum (100; 210), der Aufschießschleifen (Ba) der Fasern (Fa) der ersten Gruppe (Ea; Ca) enthält, wobei die Fasern (Fa) durch zumindest ein Loch (105; 275a) des ersten Behälters (10; 27) in das Gehäuse eindringen, und in einen zweiten abgeteilten Raum (110, 200) aufteilt, der einzelne Aufschießschleifen (Bb oder J) der Fasern (Fb; J-Fb) der zweiten Gruppe (Eb; Cb), wobei die zweite Gruppe (Eb; Cb) durch zumindest ein zweites Loch (115; 275b) in das Gehäuse eindringt, und die ersten Vorrichtungen (R; Ra) zum Verbinden der äußersten Teilabschnitte der aufgeschossenen Fasern (Fa) der ersten Gruppe (Ea; Ca), deren Enden, nachdem sie die Platte (12; 22) durchquert haben oder um sie herumverlaufen sind, jeweils in die Verbindungsvorrichtungen (R; Ra) eingebracht sind, und der äußersten Endabschnitte der aufgeschossenen Fasern der zweiten Gruppe enthält, die in gleicher Weise jeweils in die ersten Verbindungsvorrichtungen (R; Ra) eingebracht sind.

2. Gehäuse nach Anspruch 1, dadurch gekennzeichnet, daß die Platte (12) an einem der Behälter (10, 11), vorzugsweise am ersten Behälter (10), befestigbar ist.

3. Gehäuse nach Anspruch 1, dadurch gekennzeichnet, daß die Platte (12) zum Verschwenken (Y'Y) auf einem der Behälter (10, 11), vorzugsweise auf dem Behälter (10), angebracht ist.

4. Gehäuse nach einem der Ansprüche 1 bis 3, dadurch gekennzeichnet, daß die Fasern (Fa) der einen (Ea) der Gruppen und die Fasern (Fb) der anderen Gruppe (Eb) jeweils aufgeschossen und gegen-aufgeschossen sind.

5. Gehäuse nach einem der Ansprüche 1 bis 4, dadurch gekennzeichnet, daß die ersten und zweiten abgeteilten Räume (100, 110) jeweils koplanare Teile in Rinnenform oder in Ringform (123, 126) enthalten, die längs einer polyedrischen, ovalen oder analogen geschlossenen Kurve gleichverteilt sind und die die Schleifen (Ba, Bb) der Fasern (Fa, Fb) der jeweiligen Gruppe (Ea, Eb) halten.

6. Gehäuse nach den Ansprüchen 3 und 5, dadurch gekennzeichnet, daß es Mittel (120, 121) enthält, die auf der Seite (122) der Platte (12) befestigt sind, die den ersten abgeteilten Raum (100) begrenzt, um die Fasern (Fa) der ersten Gruppe (Ea) im wesentlichen parallel zur Schwenkachse (Y'Y) der Platte (12) vor dem Aufschießen der Fasern in Schleifen (Ba) geradlinig zu führen.

7. Gehäuse nach Anspruch 5 oder 6, dadurch gekennzeichnet, daß die Teile in Rinnen- oder Ringform (123, 126) in jedem abgeteilten Raum (100, 110) auf der Seite (112, 125) der Platte (12) befestigt sind, die den abgeteilten Raum (100, 110) begrenzt.

8. Gehäuse nach Anspruch 5 oder 6, dadurch gekennzeichnet, daß die Gruppe der Teile in Rinnen- oder Ringform (126) im zweiten abgeteilten Raum (110) und die ersten Verbindungsvorrichtungen auf der Seite (125) der Platte (12) befestigt und nebeneinander angeordnet sind, die den zweiten abgeteilten Raum (110) begrenzt.

9. Gehäuse nach einem der Ansprüche 5 bis 8, dadurch gekennzeichnet, daß die Fasern (Fb) der zweiten Gruppe (Eb) durch Schlitze (127) eines Teils in Rinnen- oder Ringform in den zweiten abgeteilten Raum (200) vor ihrem Aufschießen in Schleifen (Bb) in den Teilen (126) des zweiten abgeteilten Raums (110) durchtreten.

10. Gehäuse nach einem der Ansprüche 1 bis 9, dadurch gekennzeichnet, daß die ersten und zweiten Gruppen (Ea, Eb) von optischen Fasern (Fa, Fb) jeweils aus Kabeln von optischen Fasern ($Ca_1$ bis $Ca_p$, $Cb_1$ bis $Cb_p$) gebildet sind, die Löcher (105, 115) in Seiten des jeweiligen Behälters (10, 11) durchqueren und deren Fasern im jeweiligen abgeteilten Raum (100, 110) gebündelt zusammengebracht sind.

11. Gehäuse nach einem der Ansprüche 1 bis 10, dadurch gekennzeichnet, daß die ersten Verbindungsvorrichtungen (R) durch zwei Sätze von Verbindungsvorrichtungen (Ra, Rb), die jeweils das Ende einer optischen Faser (Fa, Fb) einer entsprechenen Gruppe (Ea, Eb) aufnehmen, und durch Schaltdrähte in Form optischer Fasern (J) ersetzt sind, von denen jeweils zwei Enden in Verbindungsvorrichtungen (Ra, Rb) der beiden Sätze aufgenommen sind, um jeweils die eine der Fasern (Fa) der ersten Gruppe (Ea) mit der einen der Fasern (Fb) der zweiten Gruppe (Eb) zu verbinden.

12. Gehäuse nach Anspruch 11, dadurch gekennzeichnet, daß die Schaltdrähte (J) flach in Schleifen im zweiten abgeteilten Raum (110), vorzugsweise zwischen zwei Sätzen von Verbindungsvorrichtungen (Ra, Rb), aufgeschossen sind.

13. Gehäuse nach Anspruch 12, dadurch gekennzeichnet, daß es koplanare Teile in Rinnen- oder Ringform enthält, die längs einer polyedrischen, ovalen oder analogen Form gleichverteilt sind und die die Schleifen von Schaltdrähten (J) halten.

14. Gehäuse nach Anspruch 1, dadurch gekennzeichnet, daß die Aufschießschleifen der zweiten Gruppe in eine erste und eine zweite Schleife aufgeteilt sind, daß der zweite abgeteilte Raum (200) zweite Verbindungsvorrichtungen (Rb) enthält, um jeweils Enden erster und zweiter Schleifen (J, Bb) einer optischen Faser (Fb) der zweiten Gruppe (Cb) zu verbinden, daß die ersten Schleifen der Fasern (J-Fb) der zweiten Gruppe im zweiten abgeteilten Raum (200) enthalten sind und durch Aufschießschleifen von Schaltdrähten (J) in Form optischer Fasern gebildet sind, die jeweils mit dem Rest der zweiten optischen Fasern (Fb) mittels der zweiten Verbindungsvorrichtungen (Rb) verbunden sind, und daß die zweiten Aufschießschleifen (Bb) der zweiten Fasern (Fb) im ersten abgeteilten Raum (210) enthalten sind und das zweite Loch (215b) im ersten Behälter (21) vorgesehen ist.

15. Gehäuse nach Anspruch 14, dadurch gekennzeichnet, daß die beiden Sätze (Sa, Sb) erster und zweiter Verbindungsvorrichtungen vorzugsweise parallel auf einer gleichen Seite (222) der Platte (22) befestigt sind und daß die Schleifen der Schaltdrähte (J) in einer Aufschießzone (223) zwischen den Sätzen (Sa, Sb) angeordnet sind.

16. Gehäuse nach Anspruch 15, dadurch gekennzeichnet, daß die Seite (222) der Platte (22) koplanare Teile in Rinnen- oder Ringform trägt, die längs mehrerer polyedrischer, ovaler oder analoger geschlossener Kurven in der Aufschießzone (223) gleichverteilt sind und die die Schleifen von Schaltdrähten (J) halten.

17. Gehäuse nach einem der Ansprüche 14 bis 16, dadurch gekennzeichnet, daß es koplanare Teile in Rinnen- oder Ringform enthält, die im Innenraum des ersten Behälters (21) befestigt sind, die um mehrere polyedrische, ovale oder analoge geschlossene Kurven gleichverteilt sind und die die Schleifen (Ba, Bb) der Fasern (Fa) der ersten Gruppe (Ca) und die Fasern (Fb) der zweiten Gruppe (Cb) halten.

18. Gehäuse nach einem der Ansprüche 14 bis 17, dadurch gekennzeichnet, daß jede Gruppe (Ca, Cb) mit den die Fasern (Fa, Fb) tragenden flexiblen Tragelementen im ersten abgeteilten Raum (210) in Schleifen (Ba, Bb) aufgeschossen ist.

19. Gehäuse nach einem der Ansprüche 14 bis 18, dadurch gekennzeichnet, daß es Mittel (220, 221) zum Führen der optischen Fasern (Fa, Fb) der Gruppen im wesentlichen geradlinig und parallel zur Platte (12), zwischen dem zweiten abgeteilten Raum (210) und dem ersten abgeteilten Raum (200), enthält.

20. Gehäuse nach einem der Ansprüche 14 bis 18, dadurch gekennzeichnet, daß es mehrere vorzugsweise parallele bewegliche Platten (22$_1$, 22$_2$) umfaßt, die im zweiten abgeteilten Raum (200) enthalten sind und die jeweils zwei Sätze (Sa$_1$, Sb$_1$; Sa$_2$, Sb$_2$) von ersten und zweiten Verbindungsvorrichtungen tragen, die den beiden entsprechenden Gruppen optischer Fasern (Ca, Cb) zugeordnet sind.

21. Gehäuse nach den Ansprüchen 19 und 20, dadurch gekennzeichnet, daß die Mittel (220, 221) zum Führen der optischen Fasern (Fa, Fb) in gleicher Weise Schaltdrähte (J) zwischen ersten und zweiten Verbindungsvorrichtungen führen, die durch verschiedene Platten (22$_1$, 22$_2$) getragen sind.

22. Gehäuse nach Anspruch 20 oder 21, dadurch gekennzeichnet, daß die Platten (22$_1$, 22$_2$) zur Verschwenkung (Y'Y) auf einem der Behälter (20, 21), vorzugsweise auf dem ersten Behälter (21), angebracht sind.

23. Gehäuse zum Verbinden nach den Ansprüchen 20 und 22, dadurch gekennzeichnet, daß die geradlinige Führung im wesentlichen mit der Schwenkachse (Y'Y) der Platten (22$_1$, 22$_2$) kolinear ist.

24. Gehäuse nach einem der Ansprüche 14 bis 22, dadurch gekennzeichnet, daß der zweite Behälter (21) Verbindungsvorrichtungen (S) trägt, die jeweils das Ende einer Faser einer Gruppe (C'a) mit dem Ende einer Faser einer anderen Gruppe (C'b) direkt verbinden.

25. Gehäuse nach einem der Ansprüche 1 bis 24, dadurch gekennzeichnet, daß jede Vorrichtung (R) zum Verbinden der Enden von zwei optischen Fasern (Fa, Fb oder J) ein Gehäuse umfaßt, das ein Mittel zum Tragen von Fasern, wobei es eine zentrale Nut zur Aufnahme der Enden der Fasern besitzt, und Auflageflächen der Mäntel der Fasern auf beiden Seiten der Nut enthält und das erste Mittel zum Drücken der Enden der Fasern in die Nut und zweite Mittel zum Drücken der Mäntel der Fasern auf die Auflageflächen enthält, wobei die ersten und zweiten Mittel zum Pressen im Gehäuse oberhalb des Tragmittels verschiebbar angebracht sind und durch entsprechende elastische Mittel gegen das Tragmittel rückgestellt sind.

26. Gehäuse nach einem der Ansprüche 1 bis 24, dadurch gekennzeichnet, daß jede Vorrichtung (R) zum Verbinden der Enden von zwei optischen Fasern (Fa, Fb oder J) eine Befestigungsfläche, die eine zentrale Nut zur Aufnahme der Enden der beiden Fasern besitzt und Mittel zum Drücken der Enden der Fasern in die Nut umfaßt, die durch eine Plattenfeder gebildet sind, von der ein erstes Ende durch seine Eigendurchfederung die Enden der Fasern in der Nut befestigt und von der das zweite Ende mit der Befestigungsfläche fest verbunden ist.

27. Gehäuse nach einem der Ansprüche 1 bis 26, dadurch gekennzeichnet, daß die Verbindungsvorrichtungen (R) auf der (den) Platte(n) (12, 22) parallel aufeinander angeordnet sind.

28. Gehäuse nach Anspruch 27, dadurch gekennzeichnet, daß eine Aufeinanderanordnung von Verbindungsvorrichtungen (R) einen ebenen Träger (S) umfaßt, in dem die Verbindungsvorrichtungen (R) eingesteckt sind.

**Claims**

1 - Connecting and distributing box for first end second arrays (Ea, Eb; Ca, Cb) of optical fibers (Fa, Fb; Fa, J-Fb) allowing connection modification; between fibers of the two arrays, said box being composed of a first receptable (10; 21) and a second (11; 20) receptable superposable, and the box including several first connecting devices (R ; Ra) for each connecting the end of an optical fiber (Fa) of the first array (E,; Ca) and the end of an optical fiber (Fb; J-Fb) of the second array (Eb; Cb), and a removable panel (12; 22), characterized in that the removable panel (12; 22) divides the inside of the box (1; 2) into a first compartment (100; 210) that includes coiled loops (Ba) of the fibers (Fa) of the first array (Ea; Ca), which fibers (Fa) enter said box via at least one hole (305; 215,) in the first receptable (10 ; 27), and into a second compartment (110; 200) that includes individual loop, (Fb or J) of the fibers (Fb; J-Fb) of the second array (Eb; Cb), the second array (Eb; Cb) entering the box via at least a second hole (115; 215b), and the first connecting devices (R; Ra) of the end sections of the coiled fibers (Fa) of the first array (Ea; Ca) whose the ends are respectively inserted in the connecting devices (R; Ra) after having come through or come round the panel (12; 22), and end sections of the coiled fibers of the second array which are respectively inserted, in said first connecting devices (R; Ra) too.

2 - Box according to claim 1, characterized in that the panel (12) is fixable to one of the receptables (10, 11), preferebly to the first receptacle (10).

3 - Box according to claim 1, characterized in that the panel (12) is pivotably mounted (YY') on one of the receptacles (10, 11), preferably on the first receptacle (10).

4 - Box according to one of claims 1 to 3, characterized in that the fibres (Fa) from one (Ea) of the arrays and the fibres (Fb) from the other array (Eb) are respectively coiled and counter-coiled.

5 - Box according to one of claims 1 to 4, characterized in that the first and second compartments (100; 110) each contain gulley-shaped or ring-shaped coplanar members (123; 126), that are evenly spaced out along a closed polyhedral or oval curve or like, and that hold the loops (Ba; Bb) of the fibers (Fa; Fb) from the respective array (Ea; Eb).

6 - Box according to claims 3 and 5, characterized in that it includes means (120; 121) fixed to the face (122) of the panel (12) defining the first compartment (100) for rectilinearly guiding the fibers (Fa) of the first array (Ea) substentially parallel to the pivoting axis (Y'Y) of the panel (12) before coiling said fibers into loops (Ba).

7 - Box according to claim 5 or 6, characterized in that said gulley- or ring-shaped members (123; 126) in each compartment (100; 110) are fixed to the face of said panel (12) defining said compartment (100; 110).

8 - Box according to claim 5 or 6, characterized in that said gulley- ring-shaped members (126) in the second compartment (310) and the first connecting devices are fixed and juxtaposed on the face (125) of said panel (12) defining the second compartment (110).

9 - Box according to one of claims 5 to 8, characterized in that the fibers (Fb) from the second array (Eb) run through slits (127) in one gulley- or ring-shaped member in the second compartment (200) before being coiled into loops (Bb) in the members (126) of the second compartment (110).

10 - Box according to one of claims 1 to 9, characterized of that the first and second arrays (Ea, Eb) of optical fibers (Fa; Fb) are each made up of optical fiber cables (Ca$_1$ to Ca$_P$, Cb$_1$ to Cb$_P$) that run through holes (105; 115) in sides of the respective receptacle (10; 11) and whose fibers are gathered into bundles in the respective compartment (100; 110).

11 - Box according to one of claims 1 to 10, characterized in that the first connecting devices (R) are replaced by two sets of connecting device (Ra; Rb) each receiving the end of an optical fiber (Fa; Fb) of a respective array (Ea; Eb), and by jumpers (J) in optical-fiber form each having two ends received in connecting devices (Ra; Rb) of the two sets for each connecting one of the fibers (Fa) of the first array (Ea) to one of the fibers (Fb) of the second array (Eb).

12 - Box according to claim 11, characterized in that the jumpers (J) are coiled flat into loops im the second compartment (110), preferably between the two connecting device sets (Ra; Rb).

13 - Box according to claim 12, characterized in that it includes gulley- or ring-shaped coplanar members that are evenly spaced out around a polyhedral or oval closed curve, or like and that hold the loops of the jumpers (J).

14 - Box according to claim 1, characterized in that the loops of the second array are subdivided into first and second loops, in that the second compartment (200) includes second connecting devices (Rb) for connecting each of the ends of first and second loops (J; Bb) of an optical fiber (Fb) in the second array (Cb), in that the first loops of the fibers (J-Fb) of the second array are included in the second compartment (200) and are constituted by coiled loops of jumpers (J) in optical-fiber form respectively connected to remainder of the second optical-fibers (Fb) by means of the second connecting devices (Rb), and in that the second loops (Bb) of the second fibers (Fb) are included in the first compartment (210), and the second hole (215b) is provided in the first receptable (21).

15 - Box according to claim 14, characterized in that the two sets (Sa; Sb) of first and second connecting devices are fixed preferably in parallel fashion, on a same face (222) of panel (22) and in that the loops of the jumpers (J) are arranged in a coiling area (223) between said sets (Sa; Sb).

16 - Box according to claim 15, characterized in that said face (222) of the panel (22) carries gulley- or ring-shaped coplanar members that are evenly spaced out along several closed polyhedral or oval curves, or like, in the coiling area (223) and that hold the loops of the jumpers (J).

17 - Box according to one of claims 14 to 16, characterized in that it includes gulley- or ring-shaped coplanar members that are fixed inside the first receptacle (21), that are evenly spaced out around several closed polyhedral curves, or like, and that hold the loops (Ba; Bb) of the fibers (Fa) of the first array (Ca) amd the fibers (Fb) of the second array (Cb).

18 - Box according to one of the claims 14 to 17, characterized in that each array (Ca; Cb) with flexible strength members supporting the fibers (Fa; Fb) is coiled into loops (Ba; Bb) in the first compartment (210).

19 - Box according to one of claims 14 to 18, characterized in that it includes means (220; 221) for substantially rectilinearly guiding the optical fibers (Fa; Fb) of the arrays parallel to the panel (12), between the second compartment (210) and the first compartment (220).

20 - Box according to one of claims 14 to 18, characterized in that it comprises several removable panels, preferably parallel (22$_1$; 22$_2$), that are contained in the second compartment (200) and that each support two sets (Sa$_1$, Sb$_1$; Sa$_2$, Sb$_2$) of first and second connecting devices assigned to the two respective arrays of optical fibers (Ca; Cb).

21 - Box according to claims 19 and 20, characterized in that the means (220; 221) for guiding the optical fibers (Fa; Fb) also guides jumpers (J) between first and second connecting devices supported by various panels (22₁; 22₂).

22 - Box according to claim 20 or 21, characterized in that the panels (22₁; 22₂) are pivotably mounted (Y'Y) on one of the receptables (20; 21) preferably on the first receptacle (21).

23 - Box according to claims 20 and 22, characterized in that the rectilinear guidance is substantially colinear with the pivoting axis (Y'Y) of the panels (22₁; 22₂).

24 - Box according to one of claims 14 to 20, characterized in that the second receptacle (21) bears connecting devices (s) each directly connecting the end of one fiber from an array (C'a) to the end of one fiber in another array (C'b).

25 - Box according to one of claims 1 to 24, characterized in that each device (R) for connecting ends of two optical fibers (Fa, Fb or J) comprises a housing that includes a fiber supporting means having a central groove for receiving the ends of the fibers, and surfaces on either side of the groove for bearing claddings of the fibers, and that includes first means for pressing the fiber ends into the groove and second means for pressing the fiber claddings onto the bearing surfaces, the first and second pressing means being slidably mounted above the supporting means in the box and being pulled against the supporting means by respective spring means.

26 - Box according to one of claims 1 to 24, characterized in that each device (R) for connecting ends of two optical fibers (Fa, Fb or J) comprises a base member having a central groove for receiving the ends of the two fibers, and means for pressing the fiber ends into the groove, the pressing means being made up of a spring-plate having a first end which pushes from its own flexion the fiber ends into the groove and a second end which is fastened to the base member.

27 - Box according to one of claims 1 to 26, characterized in that the connecting devices (R) are stacked parallel to the panel(s) (12; 22).

28 - Box according to the claim 27, characterized in that a stack of connecting devices (R) comprises a planar support (S) in which the connecting devices (R) are inserted.

# FIG.1

# FIG.7

# FIG.2

# FIG.3

# FIG.4

# FIG.5

# FIG.6

FIG.8A

FIG.8B

0 116 480

## FIG.9

## FIG.10